# EUROPÄISCHE PATENTSCHRIFT

(11) **EP 3 191 322 B1**
(45) Veröffentlichungstag und Bekanntmachung des Hinweises auf die Patenterteilung: **21.08.2019**
(21) Anmeldenummer: 15757303.1
(22) Anmeldetag: 07.09.2015
(51) Int. Cl.: B60G 7/00, B60G 9/00, B60B 35/00, B60B 35/08

(54) **ACHSEINHEIT**
AXLE UNIT
UNITÉ D'ESSIEU

(30) Priorität: 12.09.2014 DE 102014218323
(43) Veröffentlichungstag der Anmeldung: 19.07.2017
(73) Patentinhaber: SAF-HOLLAND GmbH, 63856 Bessenbach-Keilberg (DE)
(72) Erfinder: JANSEN, Roger, Holton, Michigan 49425 (US); GALAZIN, Gregory, Muskegon, Michigan 49445 (US)
(74) Vertreter: Müller Schupfner & Partner Patent- und Rechtsanwaltspartnerschaft mbB
(86) Internationale Anmeldenummer: PCT/EP2015/070340
(87) Internationale Veröffentlichungsnummer: WO 2016/037962

(56) Entgegenhaltungen:
- DE-A1-102012 021 433
- DE-B4- 19 781 757
- DE-U1-202009 001 029
- US-A1- 2006 237 940
- US-A1- 2013 228 993

## Beschreibung

Die vorliegende Erfindung betrifft eine Achseinheit insbesondere zum Einsatz in Nutzfahrzeugen.

Achseinheiten sind aus dem Stand der Technik insofern bekannt, dass ein Achsrohr, welches oft eine starre Achse ist, über eine Lenkeranordnung gefedert bzw. gedämpft am Rahmen des Nutzfahrzeuges gelagert bzw. festgelegt ist, wobei am Achsrohr wiederum ein oder eine Vielzahl von Fahrzeugrädern drehbar gelagert ist. Der Verbindungsbereich zwischen Achsrohr und dem Längslenker ist dabei ein besonders hoch und insbesondere mit periodischen Lastwechseln belasteter Abschnitt der Fahrwerksaufhängung des Nutzfahrzeuges. Dabei hat es sich insbesondere als problematisch herausgestellt, die an dem Achsrohr auftretenden Torsionsmomente derart in den Verbindungen zu den Längslenker aufzunehmen, dass die dort hergestellten Schweißnähte nicht beschädigt werden. Es hat in der Vergangenheit viele Versuche gegeben, den Verbindungsbereich zwischen Längslenker und Achsrohr an diese hohen Belastungen anzupassen. Dabei wurden aus dem Stand der Technik viele Achseinheiten bekannt, bei welchen eine Überdimensionierung und somit ein sehr hohes Gewicht der Achseinheit als Konsequenz der Auslegung mit höherer Sicherheit gegen Ermüdungsbrüche oder ähnliche Schädigungen des Verbindungsbereiches zwischen Achseinheit und Lenkereinheit in Kauf genommen werden muss. Es besteht somit ein Verbesserungsbedarf im Bereich der Verbindung zwischen dem Längslenker und dem Achsrohr einer Nutzfahrzeugradaufhängung, um insbesondere das Gewicht der Achseinheit zu reduzieren und gleichzeitig ausreichende Festigkeitswerte und eine einfache Herstellung zu ermöglichen.

Die DE 197 81 757 B4 offenbart einen zweiteilig ausgebildeten Längslenker, bei welchem die beiden Hälften des Längslenkers jeweils über Schweißnähte miteinander und mit einem Achsrohr stoffschlüssig verbunden sind.

Die DE 10 2012 021 433 A1 offenbart einen aus faserverstärktem Kunststoff hergestellten Längslenker, welcher jeweils mit einem Querträger in formschlüssigen Eingriff bringbar ist, wobei der Längslenker gleichzeitig als Blattfeder wirkt.

Die US 2013/0228993 A1 offenbart einen mehrteilig ausgebildeten Längslenker, bei welchem die beiden Lenkerhälften sowohl mit einem Achsrohr verschweißt werden, als auch miteinander durch eine stoffschlüssige Verbindung zusammengefügt werden.

Die US 2006/0237940 A1 offenbart einen Längslenker mit einer zweiteilig ausgebildeten Aufnahme für ein Achsrohr, wobei das insbesondere unterhalb des Achsrohrs angeordnete Bauteil der Aufnahme formschlüssig am Lenkerelement festlegbar ist, um die Achse formschlüssig zu halten.

Die DE 20 2009 001 029 U1 offenbart weiteren Stand der Technik zu Achsen für Nutzfahrzeuganhänger.

Aufgabe der vorliegenden Erfindung ist die Bereitstellung einer Achseinheit, welche einfach hergestellt werden kann und dabei besonders hohe Festigkeitswerte des Verbindungsbereiches zwischen einem Achsrohr und einem Lenkerelement erreicht, insbesondere um in dem Achsrohr wirkenden Torsionsmomenten zu widerstehen und dabei auch ein geringes Bauteilgewicht aufweist.

Diese Aufgabe wird gelöst mit einer Achseinheit gemäß Anspruch 1. Weitere Vorteile und Merkmale der vorliegenden Erfindung ergeben sich aus den abhängigen Ansprüchen.

Erfindungsgemäß umfasst die Achseinheit ein erstes Lenkerelement und ein zweites Lenkerelement, wobei das erste Lenkerelement und das zweite Lenkerelement um eine gemeinsame Schwenkachse schwenkbar an einem Fahrzeugrahmen lagerbar sind, wobei das erste Lenkerelement einen als Aussparung ausgebildeten ersten Fügebereich aufweist und das zweite Lenkerelement einen als Aussparung ausgebildeten zweiten Fügebereich aufweist, wobei der erste Fügebereich und der zweite Fügebereich derart zueinander angeordnet sind, dass sie an zwei gegenüberliegenden Seiten eines sich im Wesentlichen längs einer Rohrachse erstreckenden Achsrohres anordenbar sind, vorzugsweise angeordnet sind, und wobei das Achsrohr im ersten und zweiten Fügebereich an dem ersten und zweiten Lenkerelement stoffschlüssig festlegbar ist und vorzugsweise festgelegt ist. Das erste und das zweite Lenkerelement bilden vorteilhafterweise gemeinsam einen Längslenker eines Nutzfahrzeuges. Dabei sind beide Lenkerelemente um eine Schwenkachse schwenkbar am Fahrzeugrahmen eines Nutzfahrzeuges gelagert. Insbesondere bevorzugt ist hierbei ein Lagerauge vorgesehen, in welchem zumindest eines der Lenkerelemente vorzugsweise beide der Lenkerelemente schwenkbar festgelegt ist bzw. sind und welches am Lagerbock eines Nutzfahrzeuges festgelegt ist. Das jeweils andere Lenkerelement ist bevorzugt ebenfalls in dem Lagerauge festgelegt. Alternativ bevorzugt ist das andere Lenkerelement an dem ersten Lenkerelement festgelegt. An ihren, der Schwenkachse jeweils gegenüberliegenden Enden weisen die Lenkerelemente jeweils einen Fügebereich auf, welcher zur stoffschlüssigen Festlegung des jeweiligen Lenkerelements an einem Achsrohr ausgelegt ist. Die Fügebereiche sind jeweils eine Aussparung in einem mit Vorteil abgerundet oder gekrümmt ausgebildeten Abschnitt des jeweiligen Lenkerelements. Besonders bevorzugt weist das jeweilige Lenkerelement im Bereich seines Fügebereiches eine Kontaktfläche auf, welche im Wesentlichen die gleiche Krümmung aufweist wie die Außenfläche des Achsrohres im Bereich der Festlegung an den Lenkerelementen. Mit anderen Worten ist somit vorteilhafterweise, wenn das Achsrohr hohlzylindrisch ausgebildet ist und eine zylinderförmige Außenfläche aufweist, die jeweilige Kontaktfläche des ersten und des zweiten Lenkerelements im Bereich des Fügebereiches ebenfalls ein Ausschnitt einer Zylindermantelfläche. In einer alternativ bevorzugten Ausführungsform, in welcher das Achsrohr vorzugsweise einen gerundet, rechteckigen Querschnitt aufweist, ist die jeweilige Kontaktfläche des ersten und des zweiten Lenkerelements ebenfalls mit Vorteil rechteckig und gerundet ausgebildet. Der erste und der zweite Fügebereich sind einander bezogen auf eine Rohrachse im Wesentlichen gegenüberliegend angeordnet, wobei zwischen den beiden Fügebereichen mit Vorteil ein Raum definiert ist in welchem das Achsrohr angeordnet werden kann. Insbesondere bevorzugt ist der erste Fügebereich im Bereich der "elf Uhr"- bis "ein Uhr"-Position und der zweite Fügebereich im Bereich der "fünf Uhr"- bis "sieben Uhr"-Position eines um die Rohrachse verlaufenden Kreises angeordnet. Mit Vorteil ist somit - in der Gebrauchsposition - auf der Oberseite des Achsrohres das erste Lenkerelement festlegbar, oder vorzugsweise festgelegt, und auf der Unterseite des Achsrohres das zweite Lenkerelement festlegbar, oder vorzugsweise festgelegt. Als stoffschlüssige Verbindung zwischen dem ersten Lenkerelement und dem Achsrohr und dem zweiten Lenkerelement und dem Achsrohr eignet sich insbesondere bevorzugt eine Schweißverbindung. Alternativ oder zusätzlich zu der Schweißverbindung könnte auch eine stoffschlüssige Verbindung durch Löten oder Kleben hergestellt sein. Der erste und der zweite Fügebereich sind vorzugsweise derart als Aussparung am ersten bzw. zweiten Lenkerelement ausgebildet, dass durch den Fügebereich hindurch jeweils das Achsrohr von außerhalb der Achseinheit sichtbar oder zugänglich ist. Weiterhin bevorzugt ist die Innenkante oder Innenfläche der jeweiligen Aussparung derart benachbart zum Achsrohr angeordnet, dass entlang dieser Innenkante oder Innenfläche eine Schweißverbindung zwischen dem jeweiligen Lenkerelement und dem Achsrohr herstellbar ist.

In einer bevorzugten Ausführungsform sind das erste Lenkerelement und das zweite Lenkerelement als separate Bauteile ausgebildet. Mit anderen Worten sind somit vor Montage der Achseinheit das erste und das zweite Lenkerelement nicht direkt oder indirekt stoffschlüssig miteinander verbunden, wobei das erste und das zweite Lenkerelement erst nach Herstellung einer Schweißverbindung zum Achsrohr indirekt, oder durch Herstellen einer Schweißverbindung im Bereich einer Überlappung direkt miteinander verbunden sind. Der Vorteil der separaten Ausbildung des ersten und des zweiten Lenkerelements ist, dass beide Elemente zunächst schwenkbar um die Schwenkachse an einem Schwenklager angeordnet werden können, anschließend das Achsrohr in die gewünschte Position relativ zum ersten und dem zweiten Lenkerelement bringbar ist und die Lenkerelement anschließend in eine Position geschwenkt werden können, in welcher die Schweißverbindung zwischen dem ersten Lenkerelement und dem Achsrohr sowie zwischen dem zweiten Lenkerelement und dem Achsrohr herstellbar ist. Alternativ bevorzugt ist zunächst eine Schweißverbindung im Bereich einer Überlappung des ersten und des zweiten Lenkerelements herstellbar, wobei anschließend das erste und das zweite Lenkerelement im ersten und zweiten Fügebereich am Achsrohr festlegbar sind. Die Anzahl der gleichzeitig zu hantieren den Bauteile ist daher relativ gering und die Herstellung und Montage der Achseinheit mit Vorteil vereinfacht.

Bevorzugt umgreifen der erste Fügebereich und der zweite Fügebereich das Achsrohr zumindest bereichsweise. Insbesondere bevorzugt weist der erste Fügebereich dabei eine Krümmung um die Rohrachse auf. Weiterhin bevorzugt weist auch der zweite Fügebereich eine Krümmung um die Rohrachse auf. Bevorzugt ist, dass die Fügebereiche das Achsrohr nicht vollständig umgreifen, sondern lediglich ein 0,3- bis 0,7-faches, besonders bevorzugt ein 0,4- bis 0,6-faches des Umfangs des Achsrohres umgreifen. Indem die Fügebereiche das Achsrohr bereichsweise umgreifen ist es auf besonders einfache Weise möglich, nach dem Anordnen der Lenkerelemente relativ zum Achsrohr, eine Schweißverbindung im ersten Fügebereich sowie im zweiten Fügebereich herzustellen.

Erfindungsgemäß sind der erste Fügebereich und der zweite Fügebereich bezogen auf die Rohrachse zueinander versetzt angeordnet. Mit anderen Worten ist somit zwischen den Fügebereichen ein parallel zum Achsrohr bzw. Rohrachse gemessener Abstand vorhanden. Dieser Abstand wird bevorzugt jeweils in der Mitte der jeweiligen Erstreckung des Fügebereiches parallel zum Achsrohr gemessen. Bevorzugt ist dabei mit anderen Worten der erste Fügebereich weiter innen oder weiter außen an dem Achsrohr angeordnet als der zweite Fügebereich. Die versetzte Anordnung des ersten und des zweiten Fügebereiches ermöglicht eine verbesserte Übertragung von Torsionsmomenten zwischen dem Achsrohr und dem ersten, sowie dem zweiten Lenkerelement. Insbesondere bevorzugt kann dabei der erste Fügebereich ein höheres Torsionsmoment aufnehmen als der zweite Fügebereich, wobei der erste Fügebereich vorzugsweise an die Aufnahme eines höheren Torsionsmoments angepasst ist als der zweite Fügebereich. Durch diese bevorzugte Verteilung der Aufnahme von Torsionsmomenten unterschiedlicher Größe auf die beiden Fügebereiche ist es möglich die Lebensdauer der Achseinheit signifikant zu steigern, da in der Summe ein höheres Torsionsmoment zwischen dem Achsrohr und dem ersten und dem zweiten Lenkerelement übertragbar ist.

Besonders bevorzugt ist der erste Fügebereich näher an der Mitte des Achsrohres angeordnet als der zweite Fügebereich. Als Mitte des Achsrohres wird vorzugsweise der in der jeweiligen Fahrzeugmitte liegende Bereich des Achsrohres bezeichnet. Mit anderen Worten ist die Mitte des Achsrohres der Abschnitt oder die Richtung entlang des Achsrohres, welche(r) den mit Vorteil an den distalen Enden des Achsrohres angeordneten Achsstummeln abgewandt angeordnet ist. Insbesondere bevorzugt liegt die Achsmitte auf halber Länge der gesamten Streckung des Achsrohres längs der Rohrachse. Mit der bevorzugten Anordnung des ersten Fügebereiches näher an der Mitte des Achsrohres nimmt der erste Fügebereich vorzugsweise höhere Torsionsmomente auf als der zweite Fügebereich. Eine Torsion des Achsrohres tritt vorzugsweise dann auf, wenn an einem ersten mit dem Achsrohr verbundenen Längslenker (vorzugsweise bestehend aus einem ersten Lenkerelement und einem zweiten Lenkerelement) eine größere Einfederung vorliegt als an einem zweiten Längslenker. Dieser Zustand tritt insbesondere bei Kurvenfahrten des Nutzfahrzeuges auf.

Erfindungsgemäß weist der erste Fügebereich eine erste axiale Erstreckung parallel zur Rohrachse auf, wobei der zweite Fügebereich eine zweite axiale Erstreckung parallel zur Rohrachse aufweist, wobei mittig zur ersten axialen Erstreckung und senkrecht zur Rohrachse eine erste Fügemitte definiert ist, und wobei mittig zur zweiten axialen Erstreckung und senkrecht zur Rohrachse eine zweite Fügemitte definiert ist, wobei die erste Fügemitte um einen Versatz von der zweiten Fügemitte beabstandet ist. Als erste, oder zweite axiale Erstreckung wird mit Vorteil die maximale Erstreckung des ersten bzw. des zweiten Fügebereiches parallel zur Rohrachse definiert. Mittig zu dieser axialen Erstreckung des ersten bzw. des zweiten Fügebereiches ist jeweils eine Fügemitte definiert, welche somit als Referenzgeometrie zur Bestimmung des Versatzes zwischen dem ersten Fügebereich und dem zweiten Fügebereich dient. Der Versatz zwischen dem ersten Fügebereich in den zweiten Fügebereich wird somit nicht anhand der Außengeometrie des jeweiligen Fügebereiches bestimmt, sondern bezieht sich jeweils auf die Fügemitte des jeweiligen Fügebereiches. Da die jeweilige Referenzgeometrie bei der Übertragung einer Kraft oder eines Moments jeweils in der Mitte der kraftübertragenden Materialbereiche liegt, ist es auf diese Weise möglich, den Versatz zwischen den Fügebereichen optimal an die jeweils auf das Achsrohr und die Lenkerelement der einwirkenden Kräfte und Momente anzupassen.

Bevorzugt ist der Versatz ein 0,05- bis 0,4-faches, bevorzugt ein 0,07- bis 0,2-faches und besonders bevorzugt ein 0,07-bis 0,1-faches des Außendurchmessers des Achsrohres im Bereich des ersten und des zweiten Lenkerelements ist. Für den Fall, dass das Achsrohr im Bereich des ersten und des zweiten Lenkerelements keinen zylinder- oder hohlzylinderförmigen Querschnitt aufweist, wird als Durchmesser des Achsrohres vorzugsweise der Durchmesser eines durch die mittlere Erstreckung des Achsrohres quer zur Rohrachse gezogenen Kreises verwendet. Die Einhaltung des bevorzugten Verhältnis Bereiches von 0,05 bis 0,4 erlaubt insbesondere die Verwendung der vorliegenden Erfindung in verschiedenen Achssystemen mit unterschiedlichen Baugrößen der Lenkerelements und des Achsrohres. Der besonders bevorzugte Bereich von 0,07-0,2 bietet dabei insbesondere Vorteile für Achssysteme, welche sowohl in Nutzfahrzeuganhängern als auch in Nutzfahrzeug-Zugfahrzeugen verwendet werden sollen. Der insbesondere bevorzugte Bereich von 0,07 bis 0,1 gewährleistet dabei den besten Kompromiss aus einem besonders hohen übertragbaren Torsionsmoment und gleichzeitig einer Gewichtsreduzierung der Achseinheit durch Vermeidung von Überdimensionierung des Verbindungsbereiches zwischen den Lenkerelementen und dem Achsrohr.

Besonders bevorzugt ist die erste axiale Erstreckung gleich der zweiten axialen Erstreckung. Mit anderen Worten weisen somit der erste Fügebereich und der zweite Fügebereich die gleiche Erstreckung parallel zur Rohrachse auf. Der Vorteil dieser Ausführungsform ist das zur Herstellung des ersten Fügebereiches und des zweiten Fügebereiches mit Vorteil das gleiche Werkzeug Anwendung finden kann und somit die Fertigungskosten zur Herstellung der Achseinheit deutlich reduziert werden können.

Bevorzugt weist der erste Fügebereich und/oder der zweite Fügebereich eine umlaufende Fläche mit einer mittleren Länge auf, welche in einem Verhältnis von 0,4-1,3 vorzugsweise 0,6-1 und besonders bevorzugt von ca. 0,85-0,95 zum Umfang des Achsrohres im Bereich des ersten und/oder des zweiten Fügebereiches steht. Als umlaufende Fläche wird dabei vorzugsweise die nach innen gerichtete Fläche oder vorzugsweise gerundete Kante des als Aussparung ausgebildeten ersten und/oder zweiten Fügebereiches definiert, welche zur Herstellung einer Schweißverbindung des ersten oder des zweiten Lenkerelements mit dem Achsrohr dient. Besonders bevorzugt ist die umlaufende Fläche dabei ringförmig und gekrümmt ausgebildet, wobei die Krümmung quer zu der ringförmigen Bahn verläuft. Die Variation der mittleren Länge der umlaufenden Fläche des ersten und/oder zweiten Fügebereiches ist eine Möglichkeit, die tatsächliche Verbindungslänge, das heißt mit anderen Worten die Länge, entlang derer eine Schweißnaht zwischen dem Achsrohr und dem jeweiligen Lenkerelement hergestellt ist, zu beeinflussen. Als mittlere Länge wird in diesem Zusammenhang die Erstreckung der umlaufenden Fläche gemessen in der Mitte zwischen dem Achsrohr und dem Lenkerelement, definiert. Es hat sich dabei gezeigt, dass im Rahmen eines Verhältnisses von 0,4 bis 1,3 ein günstiger Kompromiss zwischen einer verbleibenden Restwandstärke der Lenkereinheit außerhalb des ersten und/oder zweiten Fügebereiches und einer andererseits ausreichend großen Schweißnahtlänge zwischen Lenkerelement und Achsrohr gegeben ist. Das bevorzugte Verhältnis von 0,6 bis 1 erlaubt dabei, dass bei einer bevorzugten leicht elliptischen Ausbildung des Schweißabschnittes eine mittlere Länge der umlaufenden Fläche erreicht wird, die im Wesentlichen größer oder gleich dem Umfang des Achsrohres ist, wodurch bei der Auslegung der Achseinheit vorzugsweise lediglich eine Skalierung vorgenommen werden muss und stets das entsprechend vorteilhafte Verhältnis zwischen der Kantenlänge des ersten und/oder des zweiten Fügebereiches und dem Umfang des Achsrohres gewählt ist.

Besonders bevorzugt weist das Achsrohr eine Druckhälfte und eine Zughälfte auf, wobei der erste Fügebereich ausschließlich in der Druckhälfte und der zweite Fügebereich ausschließlich in der Zughälfte des Achsrohres vorgesehen ist. Die Druckhälfte des Achsrohres ist bevorzugt der Bereich des Achsrohres, der im Betrieb der Achseinheit bei einer Biegebeanspruchung vorwiegend auf Druckspannung beansprucht wird. Insbesondere bevorzugt ist die Druckhälfte des Achsrohres dabei in jener Hälfte des Achsrohres angeordnet, welche sich im Wesentlichen auf dessen Oberseite bezogen auf die Anordnung des Achsrohres im Raum in seinem eingebauten Zustand an der Achseinheit, befindet. Die Zughälfte des Achsrohres ist vorzugsweise die der Druckhälfte gegenüberliegende Hälfte des Achsrohres. In der Zughälfte wird das Achsrohr bevorzugt überwiegend auf Zugspannung beansprucht. Im Rahmen der vorliegenden Erfindung hat es sich als vorteilhaft herausgestellt, den ersten Fügebereich in der Druckhälfte des Achsrohres anzuordnen. Der erste Fügebereich überträgt bevorzugt ein größeres Torsionsmoment als der zweite Fügebereich und wird daher bei der Biegung des Achsrohres zusätzlich zur Torsion, mit Vorteil nur mit einer Druckspannung beansprucht. Auf diese Weise kann die Lebensdauer der Verbindung zwischen Lenkerelement und Achsrohr signifikant gesteigert werden, da die Achseinheit im ersten Fügeabschnitt ausschließlich mit Torsions- und Druckspannung beansprucht wird. Der zweite Fügebereich überträgt mit Vorteil einen kleineren Anteil der Torsionsspannung des Achsrohrs als der erste Fügebereich und kann daher höhere Zugspannungen bei Biegung des Achsrohres aufnehmen und an das zweite Lenkerelement übertragen. Die das Achsrohr verformenden Kräfte, welche eine Druck- und eine Zughälfte am Achsrohr verursachen, sind vorzugsweise die an der Außenseite bzw. am distalen Ende des Achsrohres angreifende Stützkraft der Räder des Nutzfahrzeuges, sowie die durch das Lenkerelement auf das Achsrohr übertragene Gewichtskraft des Nutzfahrzeuges. Vorzugsweise ist die Druckhälfte des Achsrohres auf der der Schwerkraft entgegen gerichteten Seite des Achsrohres angeordnet.

Mit Vorteil bilden das erste Lenkerelement und das zweite Lenkerelement an ihrem, der Schwenkachse gegenüberliegenden Ende eine Überlappung aus. Die Überlappung ist mit Vorteil eine senkrecht zur Rohrachse wirkende Hinterschneidung eines Abschnitts des ersten Lenkerelements gemeinsam mit einem Abschnitt des zweiten Lenkerelements. Mit Vorteil sind das erste Lenkerelement und das zweite Lenkerelement im Bereich der Überlappung jeweils stufenförmig ausgebildet. Die Überlappung bildet mit Vorteil einen Bereich, in welchem eine Schweißnaht zwischen dem ersten und dem zweiten Lenkerelements hergestellt werden kann, wobei die Überlappung bzw. die Hinterschneidung den Achskörper vor einem Kontakt mit geschmolzenem Schweißgut schützt. Auf diese Weise kann eine Beeinträchtigung des Materials des Achskörpers außerhalb des ersten Fügebereiches und des zweiten Fügebereiches durch Anschmelzung verhindert werden. Weiterhin erlaubt die Überlappung einen besseren Toleranzausgleich für Fertigungstoleranzen des Außendurchmessers des Achsrohres, da die Lenkerelemente entsprechend mehr oder weniger zusammengeschoben werden können und sich dabei mehr oder weniger stark überlappen.

Ferner bevorzugt bilden das erste Lenkerelement und das zweite Lenkerelement zwei Überlappungen, wobei die Überlappungen einander bezogen auf die Rohrachse im Wesentlichen gegenüberliegen. Der Vorteil einer zweiten Überlappung zwischen dem ersten und dem zweiten Lenkerelement ist, dass die Festigkeit der Achseinheit durch eine zweite Schweißzone zwischen dem ersten und dem zweiten Lenkerelement im Vergleich zu der zuvor beschriebenen Auslegung mit nur einer Überlappung weiter gesteigert wird. Dabei wird auch im Bereich der zweiten Überlappung vermieden, dass die Schweißnaht in das Material des Achsrohres vordringt. Die Überlappungen liegen einander bezogen auf die Rohrachse im Wesentlichen gegenüber, wobei im Wesentlichen insbesondere eine Winkelabweichung von 1° bis 10° von einer durch die Rohrachse verlaufenden Ebene oder Geraden umfasst. Auf diese Weise kann die Position der Überlappungen besonders für eine gute Erreichbarkeit zum Herstellen einer Schweißverbindung zwischen dem ersten und dem zweiten Lenkerelement optimiert werden.

Insbesondere bevorzugt ist ein Tragelement formschlüssig und vorzugsweise kraftschlüssig an dem ersten Lenkerelement und/oder an dem zweiten Lenkerelement festlegbar oder festgelegt. Das Tragelement ist vorzugsweise der Aufnahmebereich für eine Luftfeder. Vorzugsweise weist das Tragelement eine Stützfläche auf an welcher sich eine Luftfeder abstützen kann, wobei die Luftfeder mit ihrem, der Stützfläche abgewandten Ende am Rahmen des Nutzfahrzeuges abgestützt ist. Mit Vorteil weisen das erste und/oder das zweite Lenkerelement entsprechende Eingriffsmittel zur formschlüssigen, insbesondere bevorzugt lösbaren Festlegung des Tragelements an dem ersten Lenkerelement und/oder dem zweiten Lenkerelement auf. Derartige Eingriffsmittel können beispielsweise Aussparungen oder Bohrungen sowie Vorsprünge sein, welche mit jeweils korrespondierenden Eingriffsmittel am Tragelement in formschlüssigen Eingriff bringbar sind, um das Tragelement an dem Verbund aus erstem und zweitem Lenkerelement festzulegen.

Weitere Vorteile und Merkmale der vorliegenden Erfindung ergeben sich aus der nachfolgenden Beschreibung ausgewählter Ausführungsformen mit Bezug auf die beigefügten Figuren. Es zeigen:
- Figur 1: eine Seitenansicht einer bevorzugten Ausführungsform der erfindungsgemäßen Achseinheit,
- Figur 2: eine teilweise geschnittene Ansicht der in Figur 1 gezeigten bevorzugten Ausführungsform,
- Figur 3: eine Draufsicht auf eine bevorzugte Ausführungsform des ersten Lenkerelements,
- Figur 4: eine perspektivische Ansicht einer bevorzugten Ausführungsform der erfindungsgemäßen Achseinheit und
- Figur 5: eine Seitenansicht einer bevorzugten Ausführungsform der erfindungsgemäßen Achseinheit.

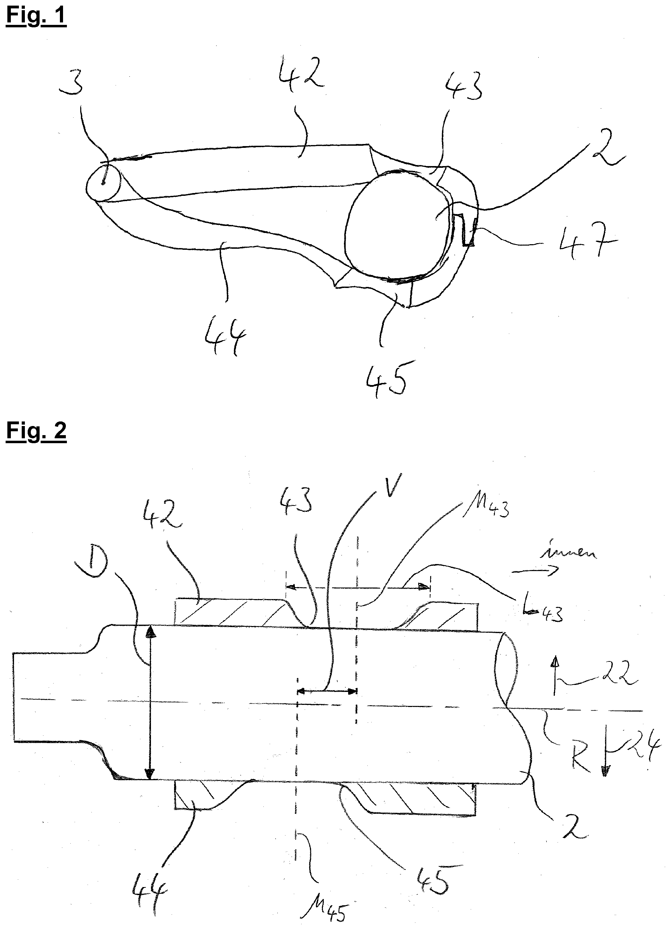

Die in Figur 1 gezeigte Achseinheit weist ein erstes Lenkerelement 42 und ein zweites Lenkerelement 44 auf. Das erste Lenkerelement 42 und das zweite Lenkerelement 44 sind vorzugsweise in einer Schwenkachse 3 schwenkbar am Rahmen des Nutzfahrzeuges, vorzugsweise über einen Lagerbock, festlegbar bzw. festgelegt. An seinem der Schwenkachse 3 gegenüberliegenden Ende weist das erste Lenkerelement 42 einen ersten Fügebereich 43 auf. Das zweite Lenkerelement 44 weist an seinem der Schwenkachse 3 gegenüberliegenden Ende einen zweiten Fügebereich 45 auf. Der zweite Fügebereich 45 und der erste Fügebereich 43 umschließen dabei zumindest bereichsweise ein zwischen dem ersten Lenkerelement 42 und dem zweiten Lenkerelement 44 angeordnetes Achsrohr 2. Der erste Fügebereich 43 und der zweite Fügebereich 45 sind vorzugsweise als Aussparungen an dem jeweiligen Lenkerelement 42,44 ausgebildet. Mit Vorteil bilden das erste Lenkerelement 42 und das zweite Lenkerelement 44 an ihrem, der Schwenkachse 3 gegenüberliegenden Ende eine Überlappung 47. Im Bereich der Überlappung 47 sind das erste Lenkerelement 42 und das zweite Lenkerelement 44 vorzugsweise miteinander verschweißt.

Figur 2 zeigt eine teilweise geschnittene Ansicht der in Figur 1 gezeigten bevorzugten Ausführungsform der erfindungsgemäßen Achseinheit. Das in dieser Ansicht nicht geschnittene Achsrohr 2 weist mit Vorteil eine Druckhälfte 22 und eine Zughälfte 24 auf. Weiterhin bevorzugt ist das erste Lenkerelement 42 mit seinem ersten Fügebereich 43 vorzugsweise an der Druckhälfte 22 des Achsrohres 2 angeordnet. Insbesondere bevorzugt ist der erste Fügebereich 43 ausschließlich in der Druckhälfte 22 mit dem Achsrohr 2 verschweißt. Der zweite Fügebereich 45 des zweiten Lenkerelements 44 ist mit Vorteil in der Zughälfte 24 des Achsrohres 2 mit diesem verschweißt. Weiterhin weist der erste Fügebereich 43 eine erste axiale Erstreckung L₄₃ und mittig zu dieser ersten axialen Erstreckung L₄₃ eine erste Fügemitte M₄₃ auf. Weiterhin weist der zweite Fügebereich 45 eine zweite axiale Erstreckung L₄₅ und mittig zu dieser zweiten axialen Erstreckung L₄₅ eine zweite Fügemitte M₄₅ auf. Insbesondere bevorzugt sind der erste Fügebereich 43 und der zweite Fügebereich 45 um einen Versatz V, welcher vorzugsweise parallel zur Rohrachse R gemessen wird, zueinander versetzt angeordnet. Der Versatz V bemisst sich dabei insbesondere zwischen der ersten Fügemitte M₄₃ und der zweiten Fügemitte M₄₅. Vorzugsweise steht der Versatz V in einem Verhältnis von 0,8 zum Außendurchmesser D des Achsrohres 2 im Bereich des ersten Fügebereiches und des zweiten Fügebereiches. Weiterhin bevorzugt ist der erste Fügebereich 43 näher an der Achsmitte des Achsrohres 2 angeordnet als der zweite Fügebereich 45. Dabei sind gleichzeitig bevorzugt die Außenkanten des ersten Lenkerelements 42 und des zweiten Lenkerelements 44 auf gleicher Höhe bezogen auf die Rohrachse R angeordnet. Mit Vorteil ist somit der erste Fügebereich 43 nicht mittig am ersten Lenkerelement 42 angeordnet. Weiterhin bevorzugt ist der zweite Fügebereich 45 nicht mittig am zweiten Lenkerelement 44 angeordnet.

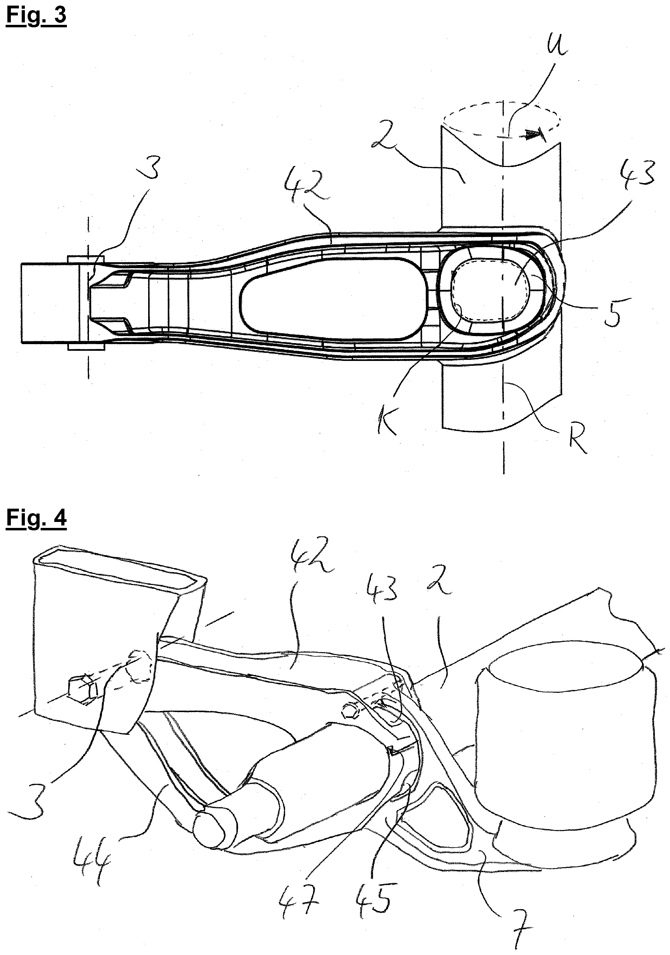

Figur 3 zeigt eine Draufsicht auf eine bevorzugte Ausführungsform des ersten Lenkerelements 42. Dabei ist insbesondere die Form des ersten Fügebereiches 43 erkennbar, welcher vorzugsweise als Aussparung am ersten Lenkerelement 42 ausgebildet ist und an seiner Innenseite eine umlaufende Fläche 5 aufweist. Die umlaufende Fläche 5 weist vorzugsweise eine mittlere Länge K auf welche in einem Verhältnis von vorzugsweise 0,85-0,95 zum Umfang U des Achsrohres 2 im Bereich des ersten Fügebereiches 43 steht.

Figur 4 zeigt eine perspektivische Ansicht einer bevorzugten Ausführungsform der erfindungsgemäßen Achseinheit. Dabei ist insbesondere ein Schwenklager vorgesehen, welches an einem Lagerbock des Rahmens des Nutzfahrzeuges festgelegt ist und das erste und das zweite Lenkerelement 42, 44 schwenkbar um eine Schwenkachse 3 lagert. Das erste Lenkerelement 42 und das zweite Lenkerelement 44 sind vorzugsweise somit um die gleiche Schwenkachse schwenkbar am Rahmen des Nutzfahrzeuges festgelegt. Der erste Fügebereich 43 und der zweite Fügebereich 45 sind teilweise durch ein Tragelement 7 verdeckt. Das Tragelement 7 dient insbesondere der Lagerung einer Luftfeder und ist vorzugsweise formschlüssig an dem ersten Lenkerelement 42 und/oder an dem zweiten Lenkerelement 44 festgelegt. Zur Herstellung der formschlüssigen Verbindung zwischen dem Tragelement 7 und dem ersten Lenkerelement 42 und/oder dem zweiten Lenkerelement 44 ist besonders bevorzugt eine Verbindung mittels Bolzen oder Schrauben vorgesehen. Der Vorteil dieser Ausführungsform ist, dass das Tragelement 7 auf einfache Weise von der Achseinheit demontiert werden kann. Vorzugsweise bilden das erste Lenkerelement 42 und das zweite Lenkerelement 44 eine Überlappung 47 aus. Die Überlappung schützt das Achsrohr 2 bei der Herstellung einer Schweißverbindung zwischen dem ersten Lenkerelement 42 und dem zweiten Lenkerelement 44 vor Kontakt mit geschmolzenem Schweißgut. Es kann somit eine Materialschwächung des Achsrohres 2 außerhalb des ersten Fügebereiches 43 und des zweiten Fügebereiches 45 vermieden werden. Auf diese Weise lassen sich die Lebensdauer der Achseinheit und die maximal durch das Achsrohr 2 übertragbaren Kräfte und Momente signifikant erhöhen.

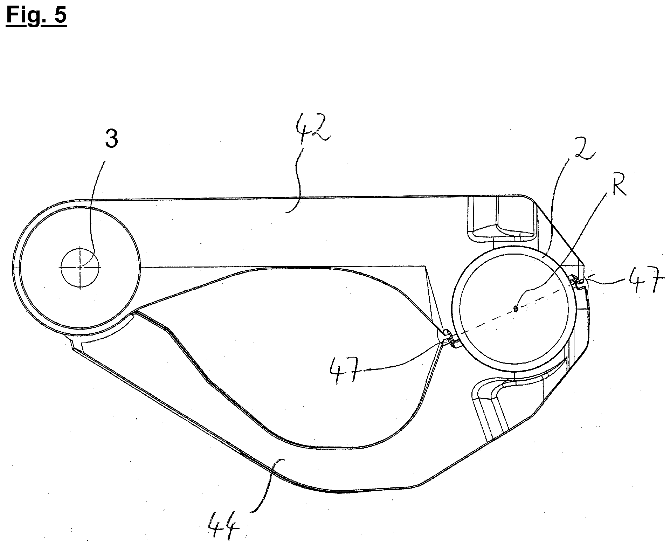

Die in Figur 5 gezeigte bevorzugte Ausführungsform der Achseinheit unterscheidet sich von der in Figur 1 gezeigten Ausführungsform insbesondere durch eine zweite Überlappung 47, welche der von der Schwenkachse 3 abgewandten Überlappung 47 (rechts in der Figur) bezogen auf die Rohrachse R im Wesentlichen gegenüber liegt. Besonders bevorzugt werden die Überlappungen 47 von einer durch die Rohrachse verlaufende Ebene (als gestrichelte Gerade dargestellt) geschnitten. Die Vorteile der zweiten Überlappung 47 entsprechen den durch die zuvor beschriebene einzelne Überlappung beschriebenen Vorteilen. Der zwischen dem ersten Lenkerelement 42 und dem zweiten Lenkerelement 44 links der zur Schwenkachse 3 hin weisenden Überlappung 47 gebildete Raum, kann besonders bevorzugt zur Anordnung weiterer Systeme der Achseinheit, wie Bremszylinder oder Leitungen, verwendet werden, wobei diese durch das erste und/oder das zweite Lenekerlelement gegen aufgewirbelte Fremdkörper geschützt sind. Bei der in Fig. 5 gezeigten Ausführungsform überlappt das erste Lenkerelement 42 im Bereich der rechts gezeigten Überlappung 47 das zweite Lenkerelement 44 an der vom Achsrohr 2 abgewandten Seite, während im Bereich der links gezeigten Überlappung 47 das zweite Lenkerelement 44 das erste Lenkerelement 42 an der vom Achsrohr 2 abgewandten Seite überlappt. Die Lenkerelemente 42, 44 können somit entlang der gestrichelt dargestellten Ebene in einer Richtung gegeneinander verschoben werden, wobei das Achsrohr 2 selbst die Lenkerelemente 42, 44 in dieser Richtung zueinander positioniert und eine sichere Anlage der Lenkerelemente 42, 44 an dem Achsrohr 2 erreicht. Die Richtung, entlang derer die Lenkerelemente 42, 44 zueinander verschoben werden können, um anschließend durch Einsetzen des Achsrohres zueinander positioniert zu werden kann umgekehrt werden, indem alternativ bevorzugt das erste Lenkerelement 42 das zweite Lenkerelement 44 an der zur Schwenkachse 3 hingewandten Seite überlappt, während das zweite Lenkerelement 44 das erste Lenkerlement 42 an der von der Schwenkachse 3 abgewandten Seite überlappt.

Im Rahmen der vorliegenden Erfindung ist es alternativ zu der in Fig. 5 gezeigten Ausführungsform bevorzugt, dass das erste Lenkerelement 42 das zweite Lenkerelement 44 auf beiden Seiten des Achsrohres 2 im Bereich zweier Überlappungen 47 überlappt. Auf diese Weise kann die Positionierung der Lenkerelemente 42, 44 zueinander verbessert werden und eine einfachere Herstellung der Schweißverbindung zwischen den Lenkerelementen 42, 44 und dem Achsrohr 2 wird ermöglicht. Bei dieser Ausführungsform trägt das erste Lenkerelement 42 den größeren Anteil der Kraft- und Momentenübertragung vom und zum Achsrohr 2. Alternativ zum beidseitigen Überlappen durch das erste Lenkerelement 42, kann das zweite Lenkerelement 44 das erste Lenkerelement 42 beidseitig überlappen, um den größeren Anteil der Kräfte und Biegemomente vom Achsrohr 2 über das zweite Lenkerelement 44 zu übertragen.

### Bezugszeichenliste:

- 2: - Achsrohr
- 3: - Schwenkachse
- 5: - umlaufende Fläche
- 7: - Tragelement
- 22: - Druckhälfte
- 24: - Zughälfte
- 42: - erstes Lenkerelement
- 43: - erster Fügebereich
- 44: - zweites Lenkerelement
- 45: - zweiter Fügebereich
- 47: - Überlappung
- D: - Außendurchmesser
- K: - mittlere Länge
- L43: - erste axiale Erstreckung
- L45: - zweite axiale Erstreckung
- M43: - erste Fügemitte
- M45: - zweite Fügemitte
- R: - Rohrachse
- U: - Umfang
- V: - Versatz

## Patentansprüche

1. Achseinheit umfassend ein erstes Lenkerelement (42) und ein zweites Lenkerelement (44),
wobei das erste Lenkerelement (42) und das zweite Lenkerelement (44) um eine gemeinsame Schwenkachse (3) schwenkbar an einem Fahrzeugrahmen lagerbar sind,
wobei das erste Lenkerelement (42) einen als Aussparung ausgebildeten ersten Fügebereich (43) aufweist und das zweite Lenkerelement (44) einen als Aussparung ausgebildeten zweiten Fügebereich (45) aufweist,
wobei der erste Fügebereich (43) und der zweite Fügebereich (45) derart zueinander angeordnet sind, dass sie an zwei gegenüberliegenden Seiten eines sich im Wesentlichen längs einer Rohrachse (R) erstreckenden Achsrohres (2) anordenbar sind,
wobei das Achsrohr (2) im ersten und zweiten Fügebereich (43, 45) an dem ersten und zweiten Lenkerelement (42, 44) stoffschlüssig festlegbar ist, wobei der erste Fügebereich (43) und der zweite Fügebereich (45) bezogen auf die Rohrachse (R) zueinander versetzt angeordnet sind,
**dadurch gekennzeichnet, dass** erste Fügebereich (43) eine erste axiale Erstreckung (L₄₃) parallel zur Rohrachse (R) aufweist,
wobei der zweite Fügebereich (45) eine zweite axiale Erstreckung (L₄₅) parallel zur Rohrachse (R) aufweist,
wobei mittig zur ersten axialen Erstreckung (L₄₃) und senkrecht zur Rohrachse (R) eine erste Fügemitte (M₄₃) definiert ist, und
wobei mittig zur zweiten axialen Erstreckung (L₄₅) und senkrecht zur Rohrachse (R) eine zweite Fügemitte (M₄₅) definiert ist, und
wobei die erste Fügemitte (M₄₃) um einen Versatz (V) von der zweiten Fügemitte (M₄₅) beabstandet ist.

2. Achseinheit nach Anspruch 1,
wobei das erste Lenkerelement (42) und das zweite Lenkerelement (44) als separate Bauteile ausgebildet sind.

3. Achseinheit nach einem der vorhergehenden Ansprüche,
wobei der erste Fügebereich (43) näher an der Mitte des Achsrohres (2) angeordnet ist als der zweite Fügebereich (45).

4. Achseinheit nach einem der vorhergehenden Ansprüche,
wobei der Versatz (V) ein 0,05- bis 0,4-faches, vorzugsweise ein 0,07- bis 0,2-faches und besonders bevorzugt ein ca. 0,07- bis 0,1-faches des Außendurchmessers (D) des Achsrohres (2) im Bereich des ersten und des zweiten Lenkerelements (42, 44) ist.

5. Achseinheit nach einem der vorhergehenden Ansprüche,
wobei der erste Fügebereich (43) und/oder der zweite Fügebereich (45) eine umlaufende Fläche (5),
wobei die umlaufende Fläche (5) eine mittlere Länge (K) aufweist, welche in einem Verhältnis von 0,4 bis 1,3, vorzugsweise 0,6 bis 1 und besonders bevorzugt von ca. 0,85 bis 0,95 zum Umfang (U) des Achsrohres (2) im Bereich des ersten Fügebereiches (43) und/oder des zweiten Fügebereiches (45) steht.

6. Achseinheit nach Anspruch 4 oder 5
wobei die erste axiale Erstreckung (L₄₃) gleich der zweiten axialen Erstreckung (L₄₅) ist.

7. Achseinheit nach einem der vorhergehenden Ansprüche,
wobei das Achsrohr (2) eine Druckhälfte (22) und eine Zughälfte (24) aufweist,
wobei der erste Fügebereich (43) in der Druckhälfte (22) vorgesehen ist, und wobei der zweite Fügebereich (45) in der Zughälfte (24) vorgesehen ist.

8. Achseinheit nach einem der vorhergehenden Ansprüche,
wobei das erste Lenkerelement (42) und das zweite Lenkerelement (44) an ihrem, der Schwenkachse (3) gegenüberliegenden Ende eine Überlappung (47) bilden.

9. Achseinheit nach einem der vorhergehenden Ansprüche,
wobei das erste Lenkerelement (42) und das zweite Lenkerelement (44) zwei Überlappungen (47) bilden,
wobei die Überlappungen (47) einander bezogen auf die Rohrachse (R) im Wesentlichen gegenüberliegen.

10. Achseinheit nach einem der vorhergehenden Ansprüche,
wobei ein Tragelement (7) formschlüssig und vorzugsweise kraftschlüssig an dem ersten Lenkerelement (42) und/oder dem zweiten Lenkerelement (44) festlegbar ist.

## Claims

1. An axle unit comprising a first suspension arm element (42) and a second suspension arm element (44),
wherein the first suspension arm element (42) and the second suspension arm element (44) can be mounted on a vehicle frame so as to be pivotable about a common pivot axis (3),
wherein the first suspension arm element (42) has a first joining region (43) configured as a recess, and the second suspension arm element (44) has a second joining region (45) configured as a recess,
wherein the first joining region (43) and the second joining region (45) are arranged relative to each other such that they can be arranged on two opposing sides of an axle tube (2) extending substantially along a tube axis (R), and
wherein the axle tube (2) can be secured by substance bonding in the first and second joining regions (43, 45) to the first and second suspension arm elements (42, 44),
wherein the first joining region (43) and the second joining region (45) are arranged offset to each other relative to the tube axis (R),
**characterized in that**
the first joining region (43) has a first axial extension (L₄₃) parallel to the tube axis (R),
wherein the second joining region (45) has a second axial extension (L₄₅) parallel to the tube axis (R),
wherein a first joint center (M₄₃) is defined centrally to the first axial extension (L₄₃) and perpendicular to the tube axis (R), and
wherein a second joint center (M₄₅) is defined centrally to the second axial extension (L₄₅) and perpendicular to the tube axis (R),
wherein the first joint center (M₄₃) is spaced from the second joint center (M₄₅) by an offset (V).

2. The axle unit as claimed in claim 1, wherein the first suspension arm element (42) and the second suspension arm element (44) are configured as separate components.

3. The axle unit as claimed in any of the preceding claims, wherein the first joining region (43) is arranged closer to the center of the axle tube (2) than the second joining region (45).

4. The axle unit as claimed in any of the preceding claims, wherein the offset (V) is 0.05 to 0.4 times, preferably 0.07 to 0.2 times and particularly preferably approximately 0.07 to 0.1 times the outer diameter (D) of the axle tube (2) in the region of the first and second suspension arm elements (42, 44).

5. The axle unit as claimed in any of the preceding claims, wherein the first joining region (43) and/or the second joining region (45) has a peripheral face (5),
wherein the peripheral face (5) has a central length (K) which stands in a ratio of 0.4 to 1.3, preferably 0.6 to 1, and particularly preferably approximately 0.85 to 0.95 to the circumference (U) of the axle tube (2) in the area of the first joining region (43) and/or the second joining region (45).

6. The axle unit as claimed in claim 4 or 5, wherein the first axial extension (L₄₃) is equal to the second axial extension (L₄₅).

7. The axle unit as claimed in any of the preceding claims, wherein the axle tube (2) has a pressure half (22) and a tension half (24), wherein the first joining region (43) is provided in the pressure half (22) and wherein the second joining region (45) is provided in the tension half (24).

8. The axle unit as claimed in any of the preceding claims, wherein the first suspension arm element (42) and the second suspension arm element (44) form an overlap (47) at their ends opposite the pivot axis (3).

9. The axle unit as claimed in any of the preceding claims, wherein the first suspension arm element (42) and the second suspension arm element (44) form two overlaps (47), wherein the overlaps (47) lie substantially opposite each other relative to the tube axis (R).

10. The axle unit as claimed in any of the preceding claims, wherein a carrier element (7) can be secured by form fit and preferably by force fit to the first suspension arm element (42) and/or the second suspension arm element (44).

## Revendications

1. Ensemble d'essieu, comportant un premier élément formant bras oscillant (42) et un second élément formant bras oscillant (44),
dans lequel
le premier élément formant bras oscillant (42) et le second élément formant bras oscillant (44) sont susceptibles d'être montés sur un châssis de véhicule de façon mobile en basculement autour d'un axe de basculement commun (3),
le premier élément formant bras oscillant (42) comprend une première zone d'assemblage (43) réalisée sous forme d'échancrure, et le second élément formant bras oscillant (44) comprend une seconde zone d'assemblage (45) réalisée sous forme d'échancrure,
la première zone d'assemblage (43) et la seconde zone d'assemblage (45) sont agencées l'une par rapport à l'autre de manière à pouvoir être agencées sur deux côtés opposés d'un tube d'essieu (2) qui s'étend sensiblement le long d'un axe de tube (R),
le tube d'essieu (2) peut être immobilisé par coopération de matière sur le premier et sur le second élément formant bras oscillant (42, 44) dans la première et dans la seconde zone d'assemblage (43, 45),
la première zone d'assemblage (43) et la seconde zone d'assemblage (45) sont agencées en décalage l'une de l'autre par rapport à l'axe de tube (R),
**caractérisé en ce que**
la première zone d'assemblage (43) présente une première extension axiale (L₄₃) parallèlement à l'axe de tube (R),
la seconde zone d'assemblage (45) présente une seconde extension axiale (L₄₅) parallèlement à l'axe de tube (R),
un premier centre d'assemblage (M₄₃) est défini au centre par rapport à la première extension axiale (L₄₃) et perpendiculairement à l'axe de tube (R), et
un second centre d'assemblage (M₄₅) est défini au centre par rapport à la seconde extension axiale (L₄₅) et perpendiculairement à l'axe de tube (R), et
le premier centre d'assemblage (M₄₃) est espacé d'un décalage (V) du second centre d'assemblage (M₄₅).

2. Ensemble d'essieu selon la revendication 1,
dans lequel
le premier élément formant bras oscillant (42) et le second élément formant bras oscillant (44) sont réalisés sous forme de composants séparés.

3. Ensemble d'essieu selon l'une des revendications précédentes,
dans lequel
la première zone d'assemblage (43) est agencée plus près du centre du tube d'essieu (2) que la seconde zone d'assemblage (45).

4. Ensemble d'essieu selon l'une des revendications précédentes,
dans lequel
le décalage (V) est de 0,05 à 0,4 fois, de préférence de 0,07 à 0,2 fois et de manière particulièrement préférée d'environ 0,07 à 0,1 fois le diamètre extérieur (D) du tube d'essieu (2) au niveau du premier et du second élément formant bras oscillant (42, 44).

5. Ensemble d'essieu selon l'une des revendications précédentes,
dans lequel
la première zone d'assemblage (43) et/ou la seconde zone d'assemblage (45) comprend une surface périphérique (5),
la surface périphérique (5) présente une longueur moyenne (K) qui est dans un rapport de 0,4 à 1,3, de préférence de 0,6 à 1 fois et de manière particulièrement préférée d'environ 0,85 à 0,95 fois le périmètre (U) du tube d'essieu (2) au niveau de la première zone d'assemblage (43) et/ou de la seconde zone d'assemblage (45).

6. Ensemble d'essieu selon la revendication 4 ou 5,
dans lequel
la première extension axiale (L₄₃) est égale à la seconde extension axiale (L₄₅).

7. Ensemble d'essieu selon l'une des revendications précédentes,
dans lequel
le tube d'essieu (2) présente une moitié sous compression (22) et une moitié sous traction (24),
la première zone d'assemblage (43) est prévue dans la moitié sous compression (22) et la seconde zone d'assemblage (45) est prévue dans la moitié sous traction (24).

8. Ensemble d'essieu selon l'une des revendications précédentes,
dans lequel
le premier élément formant bras oscillant (42) et le second élément formant bras oscillant (44) forment un chevauchement (47) à leur extrémité opposée à l'axe de basculement (3).

9. Ensemble d'essieu selon l'une des revendications précédentes,
dans lequel
le premier élément formant bras oscillant (42) et le second élément formant bras oscillant (44) forment deux chevauchements (47),
les chevauchements (47) sont sensiblement à l'opposé l'un de l'autre par rapport à l'axe de tube (R).

10. Ensemble d'essieu selon l'une des revendications précédentes,
dans lequel
un élément de support (7) est susceptible d'être immobilisé par coopération de forme et de préférence par coopération de force sur le premier élément formant bras oscillant (42) et/ou sur le second élément formant bras oscillant (44).
